# EUROPÄISCHE PATENTSCHRIFT

(11) **EP 2 872 454 B1**
(45) Veröffentlichungstag und Bekanntmachung des Hinweises auf die Patenterteilung: **09.08.2017**
(21) Anmeldenummer: 13730603.1
(22) Anmeldetag: 25.06.2013
(51) Int. Cl.: C03B 19/06, B28B 1/26, C01B 33/14, C01B 33/18, C03C 4/00

(54) **VERFAHREN ZUR HERSTELLUNG EINES DOTIERTEN SIO2-SCHLICKERS**
METHOD FOR PRODUCING A DOPED SIO2 SLURRY
PROCÉDÉ DE FABRICATION D'UNE BARBOTINE DE SIO2 DOPÉ

(30) Priorität: 26.06.2012 DE 102012012524
(43) Veröffentlichungstag der Anmeldung: 20.05.2015
(73) Patentinhaber: Heraeus Quarzglas GmbH & Co. KG, 63450 Hanau (DE)
(72) Erfinder: SUCH, Mario, 06773 Graefenhainichen (DE); SCHOETZ, Gerhard, 63741 Aschaffenburg (DE); LANGNER, Andreas, 63579 Freigericht (DE)
(74) Vertreter: Staudt, Armin Walter
(86) Internationale Anmeldenummer: PCT/EP2013/063213
(87) Internationale Veröffentlichungsnummer: WO 2014/001293

(56) Entgegenhaltungen:
- EP-A2- 1 216 956
- DE-A1-102007 045 097
- US-A1- 2004 005 352

## Beschreibung

### Technischer Hintergrund

Die Erfindung betrifft ein Verfahren zur Herstellung eines dotierten SiO₂- Schlickers indem einer Suspension, die SiO₂-Teilchen in einer wässrigen Flüssigkeit enthält, mindestens eine Dotierlösung unter Bildung des dotierten SiO₂-Schlickers fortlaufend zugegeben wird.

### Stand der Technik

Aus DE 10 2004 006 017 A1 ist ein dotierter SiO₂-Schlicker für die Herstellung von laseraktivem Quarzglas beschrieben. Zur Dotierung des Quarzglases mit Oxiden der Seltenerd- oder Übergangsmetalle wird eine "Pulver-Route" unter Einsatz eines hochreinen, homogen dotierten SiO₂-Granulates vorgeschlagen. Dabei wird von einer wässrigen Suspension ausgegangen, die SiO₂-Nanopartikel und Dotierstoffe enthält. Die Ausgangsverbindungen für diese Dotierstoffe werden in Form wasserlöslicher Hydratverbindungen AlCl₃ x 6H₂O und NdCl₃ x 6H₂O zugegeben.

Bei einem gattungsgemäßen Verfahren gemäß DE10 2007 045 097 A1 werden einer homogenisierten, alkalischen SiO₂-Suspension Dotierstoffe in gelöster Form und durch zeitlich gesteuerte, tropfenweise Zugabe einer wässrigen Dotierstofflösung unter ständigem Rühren zugeführt.

Die Technik der Tropfendotierung wirkt allerdings auch bei dem bewegten Schlicker nur lokal, da die Ionen der Dotierlösung sehr schnell an die SiO₂-Teilchen des Schlickers gebunden werden. Folglich kann die Dotierstoffkonzentration der SiO₂-Teilchen im Schlicker lokal variieren, was sich nach der Weiterverarbeitung des Schlickers zu einem gesinterten Quarzglas durch entsprechende Inhomogenitäten im Quarzglas bemerkbar macht.

### Technische Aufgabenstellung

Der Erfindung liegt daher die Aufgabe zugrunde, ein Verfahren zur Herstellung eines dotierten SiO₂-Schlickers anzugeben, das eine optimale Dotierstoffverteilung gewährleistet.

### Allgemeine Beschreibung der Erfindung

Die vorstehende Aufgabe wird hinsichtlich des Verfahrens erfindungsgemäß dadurch gelöst, dass während der sich bildende dotierte SiO₂-Schlicker fortwährend in Bewegung gehalten wird die SiO₂-Suspension und/oder die Dotierlösung als Sprühnebel aufeinander einwirken, dessen mittlerer Tropfendurchmesser im Bereich zwischen 10 µm und 100 µm liegt

Mit dem erfindungsgemäßen Verfahren wird eine feine Verteilung der Dotierlösung während des Dotierprozesses erzielt. Die Dotierlösung oder die SiO₂-Suspension als Basiskomponente wird mittels einer Sprühnebelvorrichtung zerstäubt, so dass kleine Tröpfchen mit einem mittleren Tropfendurchmesser im Bereich von 10µm bis 100µm erzeugt werden. Je nach Einstellung der Zerstäubungsdüse hinsichtlich Arbeitsdruck und Durchflussrate kann die mittlere Tropfengröße eingestellt werden.

Von einem wässrigen Nobel spricht man üblicherweise bei Tropfendurchmessern im Bereich zwischen 10 µm und 40 µm. Im Vergleich dazu liegt die Größe von "normalen" Regentropfen bei etwa 600 µm, so dass bei der Zudotierung flüssiger Tropfen nach dem Stand der Technik mittels Pipette mit Tropfendurchmessern von etwa 2 bis 5 Millimetern gerechnet werden kann.

In einer ersten Alternative der Erfindung wird die als Sprühnebel verdüste Dotierlösung auf die SiO₂-Suspension gerichtet, die ihrerseits mittels eines mechanischen Rührwerkzeugs intensiv aufgerührt wird. Das Sprühnebelfeld mit seinen sehr kleinen Tropfen überstreicht somit eine relativ große Oberfläche der SiO₂-Suspension, wodurch eine homogene Dotandenverteilung im Schlicker erreicht wird. Um die Verluste an Dotierlösung zu minimieren, muss die Düse kontrolliert über die SiO₂-Schlickeroberfläche geführt werden.

Alternativ kann auch die SiO₂-Suspension als Basiskomponente zu einem Sprühnebel verdüst werden und auf die Dotierlösung gesprüht werden. Dabei wird die Dotierlösung fortwährend aufgerührt.

Beide Alternativen führen zu einem dotierten SiO₂-Schlicker mit einer optimalen Dotierstoffverteilung.

Die Lösung der Aufgabe kann neben den oben erläuterten Varianten auch dadurch gelöst werden, dass sowohl die SiO₂-Suspension als auch die Dotierlösung als Sprühnebel aufeinander einwirken, wobei die beiden Sprühnebel mittlere Tropfendurchmesser im Bereich zwischen 10 µm und 100µm aufweisen.

Dieses erfindungsgemäße Verfahren führt zu einer besonders intensiven Wechselwirkung der Tröpfchen der SiO₂-Suspension mit denen der Dotierlösung, da die Oberfläche der beiden Komponenten im Sprühnebel maximiert ist. Im Sprühnebel vermischen sich die beiden Komponenten optimal, wobei sich kleinste Tröpfchen zu größeren Tropfen zusammenlagern, die sich unten als dotierter SiO₂-Schlicker in einem Auffanggefäß sammeln.

Die erwähnte Wechselwirkung der Tröpfchen untereinander ist umso intensiver, je kleiner die Tropfengröße ist. Es hat sich daher besonders bewährt, wenn der mittlere Tropfendurchmesser der Sprühnebel im Bereich zwischen 10 µm und 40 µm liegt.

Bevorzugt findet das Vermischen der Sprühnebel aus der SiO₂-Suspension und aus der mindestens einen Dotierlösung noch in der Nebelphase statt, also noch bevor sich die Tröpfchen der Sprühnebel mit der Oberfläche des sich bildenden dotierten SiO₂-Schickers vereinigen.

Eine weitere vorteilhafte Ausgestaltung der Erfindung besteht darin, dass die SiO₂-Suspension oder/und die Dotierlösung durch den Einsatz mehrerer Sprühdüsen zu einem Sprühnebel verdüst werden.

Der Einsatz nicht nur einer Sprühdüse gewährleistet eine effizientere Arbeitsweise. Außerdem können mehrere Sprühdüsen in unterschiedlicher Weise in Bezug auf Durchfluss, Arbeitsdruck und Raumrichtung eingestellt werden, was den Kontakt und die Wechselwirkung der Tropfen des Sprühnebel untereinander und mit der jeweils nicht verdüsten Komponente optimiert.

Es hat sich außerdem bewährt, wenn bei der Erzeugung des Sprühnebels mit einem Arbeitsdruck im Bereich von 0,5 bar bis 10 bar, vorzugsweise im Bereich kleiner 5 bar gearbeitet wird. Darüber hinaus ist es vorteilhaft bei der Erzeugung des Sprühnebels mit einer Durchflussrate im Bereich von 0,2 l/h bis 4,0 l/h zu arbeiten, vorzugsweise mit einer Durchflussrate kleiner 0,5 l/h.

Beide Parameter, Arbeitsdruck und Durchflussrate bestimmen wesentlich das Spektrum der Tropfengröße und die Effizienz des gesamten Verfahrens.

Es hat sich weiterhin als vorteilhaft hinsichtlich einer homogenen Dotierstoffverteilung erwiesen, wenn die SiO₂-Suspension oder die Dotierlösung oder der mindestens teilweise dotierte SiO₂-Schlicker durch Einsatz eines oder mehrerer Propellerrührer in Bewegung gehalten wird.

Diese Maßnahme wirkt zusätzlich homogenisierend und verhindert das Absetzen von gegebenenfalls dotierten SiO₂-Teilchen im SiO₂-Schlicker.

Um eine optimale Sprühnebelerzeugung aus der SiO₂-Suspension zu gewährleisten, wird es bevorzugt, die SiO₂-Suspension und/oder die Dotierlösung vor dem Erzeugen des Sprühnebels zu filtrieren.

Durch das Filtrieren werden etwaige gröbere SiO₂-Partikel abgetrennt, die zu Unterbrechungen oder anderen Unregelmäßigkeiten bei der Sprühnebelerzeugung führen könnten. Beispielsweise könnte die Zerstäuberdüse bei zu großen Partikeln verstopfen oder es lassen sich nicht die gewünschten Tropfendurchmesser einstellen. Auch in der Dotierlösung können herstellbedingt gröbere Verunreinigungen vorliegen, die durch die Filtration entfernt werden.

Eine weitere bevorzugte Maßnahme um eine besonders homogene SiO₂-Suspension als Basismaterial einzubringen besteht darin, die SiO₂-Suspension auf einen pH-Wert von größer 12 einzustellen. Dies wird beispielsweise durch Zugabe von konzentrierter Ammoniaklösung erreicht. Es verstärkt sich dadurch das elektrische Potenzial um die SiO₂-Partikel, was zu einer gegenseitigen Abstoßung der Partikel führt und die Sedimentationsneigung abschwächt.

Ein Haupt-Anwendungsgebiet des dotierten Si₂-Schlickers nach dem erfindungsgemäßen Verfahren ist die Herstellung von dotiertem Quarzglas, insbesondere von laseraktivem Quarzglas. Dieses enthält Dotierstoffe, die eine Verstärkung von Laserstrahlung im Wirtsmaterial Quarzglas bewirken. Dabei handelt es sich in der Regel um Seltenerd-Kationen (Lanthaniden) und/oder um Kationen der sogenannten Übergangsmetalle. Häufig werden weitere Dotierstoffe - wie etwa Oxide von Aluminium, Phosphor und Bor - zur Einstellung der Viskosität und des Brechungsindex des Quarzglases eingebracht. Dabei werden an die Homogenität der Dotierstoff-Verteilung besonders hohe Anforderungen gestellt, um Entglasung und Knötchenbildung zu vermeiden und damit einhergehend eine möglichst hohe Verstärkungsleistung und eine geringe Dämpfung der zu verstärkenden Laserstrahlung zu erzielen. Laseraktives Quarzglas kann in sogenannten Stab-, Faser- oder Scheibenlasern eingesetzt werden.

Weiterhin findet der dotierte SiO₂-Schlicker Verwendung bei der Herstellung von Quarzglasgranulat, das wiederum geeignet ist für die Herstellung von speziellen Quarzglastiegeln, von Filtergläsern, Szintillationsmaterialien, fluoreszierenden Quarzgläsern, Viskositäts- oder Brechzahl-angepassten Quarzgläsern, Stressstäben für polarisationserhaltenden Lichtwellenleiter, sowie von Quarzglasmaterial mit speziellen magnetischen oder elektrischen Eigenschaften, die auf der Wirkung der jeweiligen Dotierstoffe beruhen.

### Ausführungsbeispiele

Im Folgenden wird die Erfindung anhand von Ausführungsbeispielen näher erläutert.

### Beispiel 1

Zur Herstellung eines mit Yb₂O₃ und Al₂O₃ dotierten Quarzglases wird eine Suspension aus diskreten SiO₂-Partikeln in Form von SiO₂-Aggregaten in Reinstwasser hergestellt. Die SiO₂-Aggregate haben eine mittlere Teilchengröße um 10 µm und sie bestehen aus SiO₂-Primärteilchen mit Teilchengrößen im Bereich von 5 nm bis 100 nm. Durch Zugabe einer konzentrierten Ammoniaklösung wird ein pH-Wert von 14 eingestellt. Der Feststoffgehalt der alkalischen Suspension liegt bei 16 Gew.-%.

Der homogenisierten, alkalischen Suspension werden Dotierstoffe in gelöster Form und durch Zugabe eines Sprühnebels einer wässrigen Dotierlösung aus Al-Cl₃ und YbCl₃ (Molverhältnis 6:1) der SiO₂-Suspension zugeführt. Die SiO₂-Suspension wird währenddessen mit einem Propellerrührer kräftig durchgerührt. Zur Erzeugung des Sprühnebels wird die Dotierstofflösung mittels einer Sprühdüse zerstäubt, wobei ein Arbeitsdruck von 2 bar und eine Durchflussrate von 0,8 l/h eingestellt wird. Der so erzeugte Sprühnebel enthält Tropfen mit einem mittleren Durchmesser zwischen 10 µm und 40 µm. Mit dieser Vorgehensweise ist gewährleistet, dass ein optimal homogen dotierter SiO₂-Schlicker erhalten wird.

Aufgrund des hohen pH-Wertes der Suspension kommt es unmittelbar zu einer Mischfällung von Hydroxiden der beiden Dotierstoff in Form von Al(OH)₃ und Yb(OH)₃. Auf diese Weise wird in der Suspension eine Dotierstoffkonzentration von 1 mol-% Al₂O₃ und 0,25 mol-% Yb₂O₃ (bezogen auf den SiO₂-Gehalt der Suspension) eingestellt.

Der so dotierte SiO₂-Schlicker wird zu einem Granulat weiterverarbeitet, das wiederum zu einem Quarzglasmaterial gesintert wird und als laseraktives Quarzglas Verwendung findet. Dotiertes Quarzglas, das mittels eines dotierten SiO₂-Schlickers auf Basis der erfindungsgemäßen Sprühnebeldotierung hergestellt wurde, zeigt wesentlich weniger Inhomogenitäten als dies der Fall ist gemäß der Tropfendotierung nach dem Stand der Technik. So kann man beispielsweise durch eine 10 cm dicke seltenerd-dotierte Quarzglasprobe, die einen sprühnebeldotierten SiO₂-Schlicker als Ausgangsmaterial hatte, hindurch noch Schrift in üblicher Größe lesen. Dies ist sonst aufgrund von Streuung durch Schlieren nicht möglich, die auf eine inhomogene Verteilung von Dotierstoffen zurückgeht.

### Beispiel 2

Aus der alkalischen SiO₂-Suspension mit einem Feststoffgehalt von 16 Gew.-% gemäß Beispiel 1 wird ebenso wie aus der Dotierlösung aus Beispiel 1 ein Sprühnebel erzeugt. Vor dem Zerstäuben werden die SiO₂-Suspension und die Dotierlösung zur Abtrennung von Grobpartikeln oder anderen Verunreinigungen größer 15 µm gefiltert, indem die Komponenten jeweils durch ein Kunststoffsieb mit entsprechender Maschenweite gegossen werden. Soweit erforderlich kann insbesondere beim Filtrieren der SiO₂-Suspension das Passieren durch das Sieb mittels eines Kunststoffspatels unterstützt werden. Die SiO₂-Suspension wird dann bei einem Arbeitsdruck von 4 bis 5 bar und einem Durchsatz von etwa 2,4 l/h verdüst. Für die Dotierlösung wird dagegen der Arbeitsdruck auf 2 bar und die Durchflussrate auf 0,8 l/h eingestellt. Die Zerstäuberdüsen werden über einem Auffanggefäß für den dotierten SiO₂-Schlicker schräg nach unten weisend und im Abstand zueinander von etwa 5 bis 10 cm positioniert. Die so erzeugten Sprühnebel enthalten Tropfen mit einem mittleren Durchmesser zwischen 10 µm und 40 µm.

Die Zerstäuberdüsen können während des Dotiervorgangs in ihrem Winkel zueinander verstellt werden. Zusätzlich ist es auch möglich, dass sich die Düsen nach vorbestimmten Mustern bewegen, wodurch eine intensivere Wechselwirkung der Sprühnebel möglich ist. Die Tropfen der Sprühnebel aus SiO₂-Suspension und Dotierlösung treten im oberen Bereich des Auffanggefäßes miteinander in Wechselwirkung und sinken schließlich auf den Boden des Auffanggefäßes. Im Auffanggefäß ist weiterhin ein Rührgerät installiert, das den dort aufgefangenen, dotierten SiO₂-Schlicker in Bewegung hält. Der so dotierte Schlicker wird ebenso wie in Beispiel 1 zu einem dotierten SiO₂-Granulat weiterverarbeitet, das anschließend in vielfältiger Weise zur Herstellung von dotierten Quarzglasmaterial Anwendung findet.

## Patentansprüche

1. Verfahren zur Herstellung eines dotierten SiO₂-Schlickers indem einer Suspension, die SiO₂-Teilchen in einer wässrigen Flüssigkeit enthält, mindestens eine Dotierlösung unter Bildung des dotierten SiO₂-Schlickers fortlaufend zugegeben wird, **dadurch gekennzeichnet, dass** während der sich bildende dotierte SiO₂-Schlicker fortwährend in Bewegung gehalten wird die SiO₂-Suspension und/oder die Dotierlösung als Sprühnebel aufeinander einwirken, dessen mittlerer Tropfendurchmesser im Bereich zwischen 10 µm und 100 µm liegt.

2. Verfahren nach Anspruch 1, **dadurch gekennzeichnet, dass** der mittlere Tropfendurchmesser im Bereich zwischen 10 µm und 50 µm liegt.

3. Verfahren nach Anspruch 1 oder 2, **dadurch gekennzeichnet, dass** im Fall von Sprühnebeln aus der SiO₂-Suspension und aus der mindestens einen Dotierlösung diese in der Nebelphase miteinander vermischt werden.

4. Verfahren nach einem der vorhergehenden Ansprüche, **dadurch gekennzeichnet, dass** die SiO₂-Suspension oder/und die Dotierlösung durch den Einsatz einer oder mehrerer Sprühdüsen zu einem Sprühnebel verdüst werden.

5. Verfahren nach einem der vorhergehenden Ansprüche, **dadurch gekennzeichnet, dass** bei der Erzeugung des Sprühnebels mit einem Arbeitsdruck im Bereich von 0,5 bar bis 10 bar, vorzugsweise im Bereich kleiner 5 bar gearbeitet wird.

6. Verfahren nach einem der vorhergehenden Ansprüche, **dadurch gekennzeichnet, dass** bei der Erzeugung des Sprühnebels mit einer Durchflussrate im Bereich von 0,2 l/h bis 4,0 l/h, vorzugsweise im Bereich kleiner 0,5 l/h gearbeitet wird.

7. Verfahren nach einem der vorhergehenden Ansprüche, **dadurch gekennzeichnet, dass** die SiO₂-Suspension oder die Dotierlösung oder der mindestens teilweise dotierte SiO₂-Schlicker durch Einsatz eines oder mehrerer Propellerrührer in Bewegung gehalten wird.

8. Verfahren nach einem der vorhergehenden Ansprüche, **dadurch gekennzeichnet, dass** vor dem Erzeugen des Sprühnebels die SiO₂-Suspension und/oder die Dotierlösung gefiltert wird.

9. Verfahren nach einem der vorhergehenden Ansprüche, **dadurch gekennzeichnet, dass** die SiO₂-Suspension auf einen pH-Wert von größer 12 eingestellt wird.

## Claims

1. A method for producing a doped SiO₂ slurry in that a suspension which contains SiO₂ particles in an aqueous liquid is continuously fed with at least one doping solution so as to form the doped SiO₂ slurry, **characterized in that** while the emerging doped SiO₂ slurry is continuously kept in motion, the SiO₂ suspension and/or the doping solution act on another in the form of a spray mist the mean drop diameter of which is in the range between 10 µm and 100 µm.

2. The method according to claim 1, **characterized in that** the mean drop diameter is in the range between 10 µm and 50 µm.

3. The method according to claim 1 or 2, **characterized in that** in the case of spray mists arising from the SiO₂ suspension and from the at least one doping solution these are intermixed in the mist phase.

4. The method according to any one of the preceding claims, **characterized in that** the SiO₂ suspension or/and the doping solution are atomized into a spray mist by using one or more spray nozzles.

5. The method according to any one of the preceding claims, **characterized in that** when the spray mist is generated, an operating pressure in the range of 0.5 bar to 10 bar, preferably in the range of less than 5 bar, is used.

6. The method according to any one of the preceding claims, **characterized in that** when the spray mist is generated, a flow rate in the range of 0.2 l/h to 4.0 l/h, preferably in the range of less than 0.5 l/h, is used.

7. The method according to any one of the preceding claims, **characterized in that** the SiO₂ suspension or the doping solution or the at least partly doped SiO₂ slurry is kept in motion by using one or more propeller stirrers.

8. The method according to any one of the preceding claims, **characterized in that** the SiO₂ suspension and/or the doping solution is filtered prior to the generation of the spray mist.

9. The method according to any one of the preceding claims, **characterized in that** the SiO₂ suspension is adjusted to a pH of more than 12.

## Revendications

1. Procédé de fabrication d'une barbotine de SiO₂ dopé par adjonction en continu d'au moins une solution de dopage à une suspension, laquelle contient des particules de SiO₂ dans un liquide aqueux, avec formation de la barbotine de SiO₂ dopé, **caractérisé en ce que** pendant que la barbotine de SiO₂ doté se formant est continuellement maintenue en mouvement, la suspension de SiO₂ et/ou la solution de dopage agissent l'une sur l'autre en tant que brouillard de gouttelettes, dont le diamètre moyen des gouttelettes est situé dans la plage comprise entre 10 µm et 100 µm.

2. Procédé selon la revendication 1, **caractérisé en ce que** le diamètre moyen des gouttelettes est situé dans la plage comprise entre 10 µm et 50 µm.

3. Procédé selon la revendication 1 ou 2, **caractérisé en ce que** dans le cas de brouillards de gouttelettes constitués de la suspension de SiO₂ et de l'au moins une solution de dopage, celles-ci sont mélangées entre elles pendant la phase de nébulisation.

4. Procédé selon l'une quelconque des revendications précédentes, **caractérisé en ce que** la suspension de SiO₂ et/ou la solution de dopage, par l'utilisation d'une ou de plusieurs buses de pulvérisation, sont atomisées en un brouillard de gouttelettes.

5. Procédé selon l'une quelconque des revendications précédentes, **caractérisé en ce que** lorsque le brouillard de gouttelettes est généré, on travaille avec une pression de travail située dans la plage de 0,5 bar à 10 bars, de préférence dans la plage inférieure à 5 bars.

6. Procédé selon l'une quelconque des revendications précédentes, **caractérisé en ce que** lorsque le brouillard de gouttelettes est généré, on travaille avec un débit situé dans la plage de 0,2 l/h à 4,0 h/l, de préférence dans la plage inférieure à 0,5 l/h.

7. Procédé selon l'une quelconque des revendications précédentes, **caractérisé en ce que** la suspension de SiO₂ ou la solution de dopage ou l'au moins une barbotine de SiO₂ partiellement dopé est maintenue en mouvement par l'utilisation d'un ou de plusieurs agitateurs à hélice.

8. Procédé selon l'une quelconque des revendications précédentes, **caractérisé en ce qu'**avant de générer le brouillard de gouttelettes, la suspension de SiO₂ et/ou la solution de dopage sont filtrées.

9. Procédé selon l'une quelconque des revendications précédentes, **caractérisé en ce que** la suspension de SiO₂ est réglée sur une valeur de pH supérieure à 12.
